# EUROPÄISCHE PATENTSCHRIFT

(11) **EP 2 581 005 B1**
(45) Veröffentlichungstag und Bekanntmachung des Hinweises auf die Patenterteilung: **16.07.2014**
(21) Anmeldenummer: 12188462.1
(22) Anmeldetag: 15.10.2012
(51) Int. Cl.: A47J 43/26

(54) **Nussknacker zum Aufbrechen von Nüssen**
Nutcracker for breaking open nuts
Casse-noix destiné à ouvrir des noix

(30) Priorität: 15.10.2011 DE 202011106860 U
(43) Veröffentlichungstag der Anmeldung: 17.04.2013
(73) Patentinhaber: Roling, Markus, 83022 Rosenheim (DE)
(72) Erfinder: Roling, Markus, 83022 Rosenheim (DE)
(74) Vertreter: Becker Kurig Straus

(56) Entgegenhaltungen:
- DE-A1- 2 022 379
- DE-U- 7 702 303
- DE-U1- 29 616 219
- US-A- 1 210 414
- US-A- 2 804 111
- US-A- 3 667 511
- US-A- 5 533 265
- US-B1- 6 237 476

## Beschreibung

Die Erfindung betrifft einen Nussknacker zum Aufbrechen von Nüssen, insbesondere von Walnüssen.

Im Stand der Technik sind mehrere Ausführungen von Nussknackern bekannt, von Zangen-, Hebel- oder Schraub-Nussknackern bis hin zu Nussknackerfiguren.

Meist handelt es sich um Geräte, bei denen die Nüsse zum Knacken zwischen die Backen einer Zange geklemmt und dann durch Hebeldruck zerquetscht werden.

Andere Geräte haben ein schraubenartiges Gewinde, durch das eine Fläche gegen eine Nuss gepresst wird und diese knackt.

Bei beiden Arten von Geräten ist relativ viel Kraft in den Händen nötig, sie sind von Kindern und älteren Personen schwer bedienbar.

Bei den zangenartigen Geräten besteht außerdem Verletzungsgefahr durch Einklemmen der Finger oder des Handballens.

Ferner gibt es Nussknacker mit einer Hülse, die ein Herumfliegen von Nussschalen verhindert. Diese geschlossenen Nussknacker funktionieren beispielsweise nach dem Prinzip einer Schleuder, wobei eine Nuss gegen eine Aufprallfläche geschleudert wird und dadurch bricht. Es gibt auch geschlossene Nussknacker mit einer Schraube, die in einem Gewinde geführt wird und die Nuss zerquetscht. Es gibt ebenfalls Nussknacker mit einem Stößel, der von oben mit Kraft auf die Nuss gestoßen wird und diese dadurch zertrümmert. Andere Nussknacker basieren auf einem Schlagbolzen mit einer Bolzenfeder, die in einer Röhre bzw. Hülse geführt sind.

Aus den Patentdokumenten US 3667511 A, DE 2022379 A, DE 29616219 U, DE 7702303 U und US 6237476 B sind bereits verschiedene Nussknacker bekannt.

Aus der Anmeldung US 3667511 A ist eine Vorrichtung zum Knacken von Schalen essbarer Nüsse bekannt, die ein Gehäuseelement zur Aufnahme einer Nuss aufweist. Weiterhin ist dort ein Schlagstück vorgesehen, das gegen die Kraft eines Gummibandes gespannt werden kann und beim Loslassen zurückschnellt um eine Nuss zu zerschlagen.

DE 2022379 A offenbart eine Vorrichtung zum Entschalen von senkrecht aufgestellten Nüssen mit einem Hammer und mit einem Amboss, wobei ein Hammerkopf mit einem Hammerstiel betätigt wird, um auf die Nuss aufzutreffen.

Das Gebrauchsmuster DE 29616219 U betrifft einen Nussknacker zum Knacken von Nüssen, mit einem Druckteil und einem Wiederlager, die dazwischen eine Aufnahmekammer für Nüsse aufweist.

Das Gebrauchsmuster DE 7702303 U offenbart eine Vorrichtung zum Aufbrechen der Schalen von harthäutigem Obst, wie Walnüsse, Haselnüsse und dergleichen mit einem napfförmigen Pressbehälter und einem quer zur Behälterachse durch eine seitliche Öffnung gegen die in dem Pressbehälter eingelegte Nuss bzw. Nüsse einführbaren Pressstempel.

Die US-Patentschrift US 6237476 BA betrifft eine neue Nussknackervorrichtung mit einem rohrförmigen Gehäuse, in das eine Nuss eingelegt werden kann. Ein Schlagschtück kann in dem Gehäuse gegen eine Druckfeder gespannt werden. Beim Loslassen schlägt das Schlagstück gegen eine, in dem durch eine Kappe verschlossenen Gehäuse liegende Nuss um sie zu öffnen.

Es ist daher wünschenswert, einen Nussknacker mit einer effizienten Nuss-Brecheinrichtung anzugeben. Es ist ebenfalls wünschenswert, einen Nussknacker zu haben, der einfach verhindert, dass Nuss- und Schalenbruchstücke unkontrolliert umherfliegen, so dass das Umfeld verunreinigt oder Personen gefährdet werden. Weiterhin sind Nussknacker wünschenswert, die ein möglichst geringes Verletzungsrisiko aufweisen. Die Aufgabe der vorliegenden Erfindung besteht zudem darin, einen einfachen Nussknacker zu entwickeln, der folgende Eigenschaften vereint: wenig Materialaufwand, geringer technischer Aufwand, geringes Gewicht und eine geringe Anzahl an Bauteilen.

Die vorliegende Erfindung löst die Aufgabe durch einen Gegenstand mit den Merkmalen des Anspruchs 1. Vorteilhafte Ausführungsformen sind in den abhängigen Ansprüchen beschrieben.

Gemäß der Erfindung wird ein Nussknacker zum manuellen Öffnen von Nuss-Schalen, insbesondere von Walnüssen, bereitgestellt, der einen Hohlkörper umfasst, der aus Federstahl in Federwindungen gewickelt ist. Der Hohlkörper bildet einerseits das Gehäuse des Nussknackers und andererseits eine Feder, die dazu dient, eine Energie zum Zerschlagen einer Nuss zu speichern.

Der Hohlkörper bildet durch die Federwindungen ein Schutzelement, insbesondere einen Spritzschutz gegen absplitternde Nuss- und Schalenstücke. Die Federwindungen des Hohlkörpers liegen beim Aufschlag oder bei entspannten Federwindungen so dicht beieinander, dass absplitternde Nuss- und Schalenstücke nicht aus dem Hohlkörper gelangen können. Bei einem gespannten Hohlkörper bzw. bei gespannten Federwindungen direkt vor dem Zerschlagen der Nuss können die Federwindungen so weit voneinander beabstandet sein, dass durch die Abstände eine zu knackende Nuss in dem Hohlkörper erkennbar ist und auf die Nuss gezielt werden kann.

Der Nussknacker umfasst weiter ein Schlagbolzenelement, das an einem Ende fest mit dem Hohlkörper verbunden ist. Das Schlagbolzenelement kann durch die, das Gehäuse bildende Feder beschleunigt werden, um auf eine zu knackende Nuss schlagartig aufzutreffen. Die Nuss wird dann zwischen dem Schlagbolzen und einer Auflage wie einer Tischplatte oder einer gesonderten Ambossplatte bzw. -schale zerbrochen. Der Schlagbolzen ist bevorzugt so an dem Hohlkörper angebracht, dass er nicht direkt auf eine Unterlage schlagen kann, sondern in etwa der Höhe einer Nuss oder einer halben Nuss über einer Unterlage angeordnet ist.

In einer weiteren Ausführungsform umfasst der Nussknacker an dem Hohlkörper weiter ein Griffelement. Das Griffelement kann durch den Hohlkörper oder durch das Schlagbolzenelement gebildet werden. Das Griffelement kann auch an dem Hohlkörper oder dem Schlagbolzenelement befestigt sein.

In einer weiteren Ausführungsform des Nussknackers umfasst das Griffelement einen Kugelgriff. Der Kugelgriff kann an einem Schlagbolzen und/oder an dem Hohlkörper befestigt sein.

Der Nussknacker umfasst Fixierelemente, mit denen der Hohlkörper mit einer Hand bzw manuell auf einer Unterlage fixiert werden kann. Die Fixierelemente sind an einem unteren Ende des Hohlkörpers angebracht.

In einer bevorzugten Ausführungsform besteht der Nussknacker aus maximal drei, bevorzugt nur zwei Bauteilen, nämlich Hohlkörper und Schlagbolzenelement. In dieser Ausführungsform ist der Hohlkörper aus einem einzelnen Federstahldraht gebogen, wobei an einem Ende der Schlagbolzen mit einem Griffstück befestigt ist. Vorzugsweise ist der Hohlkörper aus einem einzelnen Federstahldraht gebogen, und der Schlagbolzen ist einstückig mit einem Griffstück ausgeführt. Weiter bevorzugt ist der Hohlkörper aus einem einzelnen Federstahldraht gebogen, wobei eine Umwicklung aus dem Federstahldraht das Griffstück einstückig mit dem Hohlkörper bildet.

In einer weiteren Ausführungsform des Nussknackers sind die Fixierelemente einstückig aus dem Federstahl der Federwindungen gebogen.

In einer zusätzlichen Ausführungsform des Nussknackers weist der Hohlkörper im Wesentlichen eine glockenförmige Gestalt auf. Die Glockenform kann verhindern, dass ein Benutzer, der den Hohlkörper nicht an den Fixierelementen hält, beim Knacken einer Nuss seine Haut zwischen den einzelnen Windungen einklemmt und sich verletzt.

In einer weiteren zusätzlichen Ausführungsform des Nussknackers umfasst dieser weiter eine Schale, um eine Nuss aufzunehmen. Die Schale dient als Amboss, auf dem die Nuss von dem Schlagbolzen zertrümmert werden kann, ohne eine Unterlage wie eine Tischplatte zu beschädigen.

In einer zusätzlichen Ausführungsform des Nussknackers weist die Schale einen Außendurchmesser auf, der an einen unteren Innendurchmesser des Hohlkörpers angepasst ist, sodass die Schale bezüglich des Hohlkörpers zentriert wird. Dadurch ist es leichter möglich, eine auf der Schale platzierte Nuss mit dem Schlagbolzen zu treffen.

In einer anderen Ausführungsform des Nussknackers weist der Nussknacker weiter eine weitere Schale auf, die eine andere Höhe aufweist als die vorstehend beschriebene Schale. Damit umfasst der Nussknacker zwei unterschiedlich hohe Schalen für verschiedene Nüsse. Eine flache Schale kann zum Knacken von Wal- und Paranüssen dienen, da sie einen größeren Abstand zwischen einer Auflage einer Nuss und dem Schlagbolzen ermöglicht als eine höhere Schalte. Eine höhere Schale kann zum Knacken von kleineren Nüssen wie Mandeln oder Haselnüssen dienen.

Der Hohlkörper bildet mit den Federwindungen eine Zugfeder. Durch die Auslegung als Zugfeder wird der Schlagbolzen durch Ziehen gespannt und schlägt nach dem Loslassen auf eine unter dem Hohlkörper liegende Nuss.

In Folgenden wird die Erfindung anhand der Figuren beschrieben.

Figur 1 stellt eine seitliche Teil-Schnittansicht einer Ausführungsform eines erfindungsgemäßen Nussknackers dar.

Figur 2 zeigt eine Aufsicht auf den Nussknacker von Figur 1.

Figur 3 stellt eine teil-geschnittene Seitenansicht einer Variante des Nussknackers mit einem Kugelgriff als Griffelement und einer Schale für die Aufnahme der Nuss gemäß einer weiteren Ausführungsform dar.

Figur 4 zeigt eine seitliche Ansicht einer Schale für den Nussknacker.

Figur 5 stellt zeigt eine Aufsicht auf die Schale von Figur 4 dar.

Sowohl in den Figuren als auch in den Zeichnungen werden gleiche oder ähnliche Bezugszeichen verwendet, um gleiche oder ähnliche Komponenten und Elemente zu bezeichnen. Die Figuren stellen den Gegenstand der vorliegenden Erfindung nur schematisch dar.

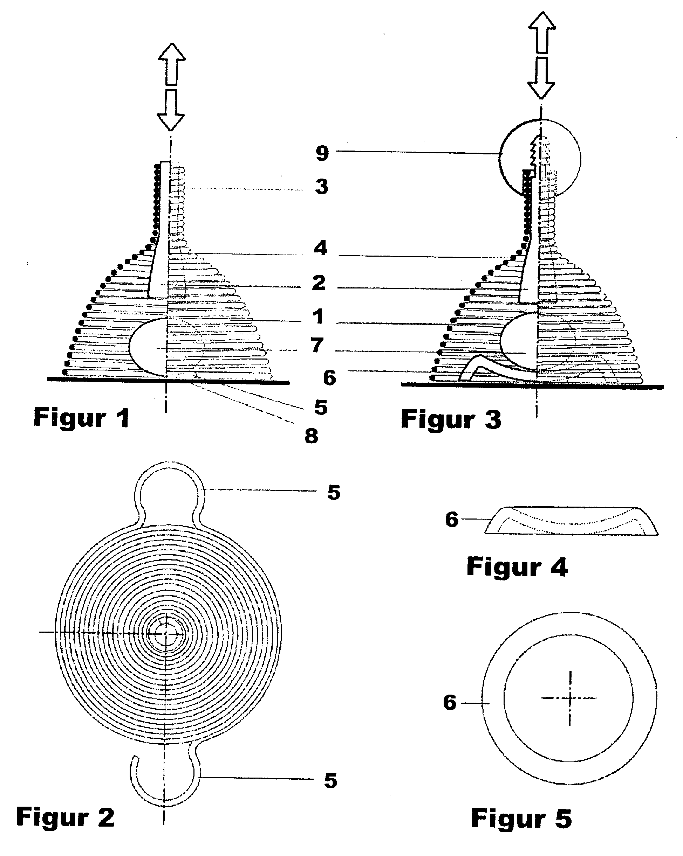

Figur 1 stellt eine teil-geschnittene Seitenansicht einer Ausführungsform eines erfindungsgemäßen Nussknackers dar. Der Hauptteil des Nussknackers wird durch einen Hohlkörper 1 gebildet, der aus Federstahldraht gewickelt und geformt ist. Der Hohlkörper 1 mit seinen Federwindungen 4 verjüngt sich nach oben und geht in eine schmale rohrförmige obere Öffnung über. In die schmale rohrförmige obere Öffnung ist ein Schaft eingefügt, der als Schlagbolzenelement 2 dient. Die oberen Federwindungen 4 dienen zugleich als Griffelement 3. Das untere Ende des Schaftes bzw. Schlagbolzenelements 2 ragt unten aus der rohrförmigen Öffnung in den Hohlkörper 1 hinein. Eine untere Auflagefläche eines Tisches oder einer Unterlage dient als Amboss bzw. Schlagfläche 8 zum Knacken einer Nuss 7. Eine unterste Federwindung 4 des Hohlkörpers 1 im unteren Bereich ist zu zwei gegenüberliegenden Griffe bzw. Fixierelementen 5 ausgeformt.

Der Hohlkörper 1 wird an den Griffen bzw. Fixierelementen 5 mit Daumen und einem Finger derselben Hand auf einer Unterlage 8 fixiert.

Der Schaft bzw. das Schlagbolzenelement wird an dem Griffelement 3 nach oben gezogen und durch die Federwindungen 4 des Feder-Hohlkörper 1 gespannt, wobei der Hohlkörper nach oben gestreckt wird. Durch die Zwischenräume zwischen den gespannten Federwindungen 4 wird die Nuss sichtbar, und es wird möglich, mit dem Schlagbolzenelement 2 auf die Nuss 7 zu zielen.

Wird das Griffelement 3 losgelassen, zieht sich der Hohlkörper 1 durch die Entspannung der Federwindungen 4 schnell wieder zusammen und es erfolgt ein Schlag mit einer Aufprallfläche des Schlagbolzenelements 2 auf die Nuss 7. Der Hohlkörper 1 ist im Moment des Auftreffens auf die Nuss 7 wieder geschlossen und verhindert so ein Herumfliegen splitternder Schalen- und Nussstücke.

Figur 2 zeigt eine Aufsicht auf den Nussknacker von Figur 1. In der Figur 2 sind besonders gut die Griffe bzw. Fixierelemente 5 zu erkennen mit denen der Nussknacker die mit Daumen und einem Finger gehalten werden kann.

Figur 3 zeigt eine andere Ausführung des Nussknackers von Figur 1. In Figur 3 umfasst das Griffelement einen auf einem oberen Ende des Schaftes bzw. des Schlagbolzens 2 befestigten Kugelgriff 9.

In Figur 3 ist der Nussknacker weiter durch eine flache Schale 6 zur Aufnahme der Nuss 7 ergänzt.

Figuren 4 und 5 stellen jeweils eine Seitenansicht und eine Aufsicht auf die flache Schale 6 zur Aufnahme einer Nuss dar.

Ein Nussknacker zum manuellen Öffnen von Nussschalen, insbesondere von Walnüssen, ist dadurch gekennzeichnet, dass er aus einem aus Federstahl in Federwindungen 4 gewickelten Hohlkörper 1 besteht.

Der Hohlkörper 1 ist mit Griffelement 3 zugleich sowohl Funktionselement als auch Schutzelement, insbesondere Spritzschutz gegen herumfliegende Schalenstücke.

Das Schlagbolzenelement 2 ist fest mit dem Hohlkörper 1 verbunden.

Der Nussknacker kann an Griffelementen/Fixierpunkten 5 leicht mit einer Hand auf einer Unterlage fixiert werden.

In einer anderen Ausführungsform des vorstehenden Nussknackers besteht er aus wenig Material und wenigen Bauteilen.

In einer zusätzlichen Ausführungsform des vorstehenden Nussknackers hat er ein geringes Gewicht.

Die vorliegende Erfindung soll nicht auf die in den Figuren dargestellten Ausführungsformen beschränkt sein. Der in den angehängten Ansprüchen definierte Schutzanspruch deckt auch Änderungen und Variationen der vorliegenden Erfindung ab.

### Bezugszeichenliste

- 1: Nussknacker/Hohlkörper
- 2: Schaft/Schlagbolzenelement
- 3: Griffelement
- 4: Federwindung
- 5: Griffe/Fixierelemente/Fixierpunkte
- 6: Schale
- 7: Nuss
- 8: Auflagefläche
- 9: Kugelgriff

## Patentansprüche

1. Nussknacker zum manuellen Öffnen von Nussschalen, insbesondere von Walnüssen, mit einen Hohlkörper (1), der **durch** Federwindungen (4) gebildet ist, die Federstahl aufweisen, wobei der Hohlkörper (1) mit den Federwindungen (4) eine Zugfeder bildet, die dazu dient, Energie zum Zerschlagen einer Nuss zu speichern,
mit Fixierelementen (5) am unteren Ende des Hohlkörpers (1), mit denen der Hohlkörper (1) manuell auf einer Unterlage fixiert werden kann,
mit einem Schlagbolzenelement (2), das an seinem einen Ende fest mit Federwindungen (4) des Hohlkörpers (1) verbunden ist, wobei das Schlagbolzenelement (2) durch die Zugfeder beschleunigt werden kann, um auf eine zu knackende Nuss schlagartig aufzutreffen, und
wobei der Hohlkörper (1) weiter ein gehäuseförmiges Schutzelement, insbesondere einen Spritzschutz gegen herumfliegende Schalenstücke bildet.

2. Nussknacker nach Anspruch 1, **dadurch gekennzeichnet, dass** der Hohlkörper (1) weiter ein Griffelement (3) umfasst.

3. Nussknacker nach Anspruch 2, wobei das Griffelement (3) einen Kugelgriff (9) umfasst.

4. Nussknacker nach einem der vorstehenden Ansprüche, wobei der Nussknacker aus maximal drei, bevorzugt aus zwei Bauteilen besteht, nämlich dem Schlagbolzenelement (2) und dem Hohlkörper (1).

5. Nussknacker nach einem der vorstehenden Ansprüche, wobei die Fixierelemente (5) einstückig aus dem Federstahl der Federwindungen (4) gebogen sind.

6. Nussknacker nach einem der vorstehenden Ansprüche, wobei der Hohlkörper (1) im Wesentlichen glockenförmig ist.

7. Nussknacker nach einem der vorstehenden Ansprüche, weiter umfassend eine Schale (6), um eine Nuss (7) aufzunehmen.

8. Nussknacker nach Anspruch 7, wobei die Schale (6) einen Außendurchmesser aufweist, der an einen unteren Innendurchmesser des Hohlkörpers (1) angepasst ist.

9. Nussknacker nach Anspruch 7 oder 8, weiter umfassend eine weitere Schale, die eine Höhe aufweist, die sich von einer Höhe der Schale (6) unterscheidet.

## Claims

1. A nutcracker for manually opening nut shells, in particular walnuts, with a hollow body (1) formed by spring windings (4) that exhibit spring steel, wherein the hollow body (1) with the spring windings (4) forms a tension spring used to store energy for breaking a nut into pieces,
with fixing elements (5) at the lower end of the hollow body (1), with which the hollow body (1) can be manually fixed on a substrate,
with a firing pin element (2) whose one end is rigidly joined with spring windings (4) of the hollow body (1), wherein the firing pin element (2) can be accelerated by the tension spring to immediately impact a nut to be cracked, and
wherein the hollow body (1) further forms a housing-shaped protective element, in particular a splash guard against flying shell pieces.

2. The nutcracker according to claim 1, **characterized in that** the hollow body (1) further encompasses a gripping element (3).

3. The nutcracker according to claim 2, wherein the gripping element (3) encompasses a ball handle (9).

4. The nutcracker according to one of the preceding claims, wherein the nutcracker consists of at most three, preferably of two components, namely the firing pin element (2) and hollow body (1).

5. The nutcracker according to one of the preceding claims, wherein the fixing elements (5) are bent as a single piece from the spring steel of the spring windings (4).

6. The nutcracker according to one of the preceding claims, wherein the hollow body (1) is essentially bell-shaped.

7. The nutcracker according to one of the preceding claims, further encompassing a shell (6) to accommodate the nut (7).

8. The nutcracker according to claim 7, wherein the shell (6) exhibits an outer diameter that is adjusted to a lower inner diameter of the hollow body (1).

9. The nutcracker according to claim 7 or 8, further encompassing another shell exhibiting a height that differs from a height of the shell (6).

## Revendications

1. Casse-noix destiné à ouvrir des coques de fruits à coque manuellement, en particulier de noix, comprenant un corps creux (1) formé par des spires à ressort (4), qui présentent de l'acier à ressort, dans lequel le corps creux (1) forme un ressort de traction avec les spires à ressort (4) qui sert à stocker de l'énergie pour casser une noix,
comprenant des éléments de fixation (5) à l'extrémité inférieure du corps creux (1) avec lesquels le corps creux (1) peut être fixé manuellement sur un support,
comprenant un élément de percuteur (2) qui est relié par une extrémité à des spires à ressort (4) du corps creux (1), sachant que l'élément de percuteur (2) peut être accéléré par le ressort de traction pour arriver soudainement sur une noix à casser, et
sachant que le corps creux (1) forme en outre un élément protecteur formant un logement, en particulier une protection contre les éclats de morceaux de coque projetés dans l'air.

2. Casse-noix selon la revendication 1, **caractérisé en ce que** le corps creux (1) présente en outre un élément de poignée (3) .

3. Casse-noix selon la revendication 2, **caractérisé en ce que** l'élément de poignée (3) comprend une poignée sphérique (9).

4. Casse-noix selon l'une des revendications précédentes, dans lequel le casse-noix est composé d'au moins trois, de préférence deux parties, à savoir l'élément de percuteur (2) et le corps creux (1).

5. Casse-noix selon l'une des revendications précédentes, dans lequel les éléments de fixation (5) sont pliés d'un seul tenant dans l'acier à ressort des spires à ressort (4).

6. Casse-noix selon l'une des revendications précédentes, dans lequel le corps creux (1) est essentiellement en forme de cloche.

7. Casse-noix selon l'une des revendications précédentes, comprenant en outre une coque (6) pour recevoir une noix (7).

8. Casse-noix selon la revendication 7, dans lequel la coque (6) présente un diamètre extérieur qui est adapté à un diamètre intérieur inférieur du corps creux (1).

9. Casse-noix selon la revendication 7 ou 8, comprenant en outre une coque supplémentaire qui présente une hauteur qui est différente d'une hauteur de la coque (6) .
